# EUROPÄISCHE PATENTANMELDUNG

(11) **EP 4 349 659 A1**
(43) Veröffentlichungstag der Anmeldung: **10.04.2024**
(21) Anmeldenummer: 23200324.4
(22) Anmeldetag: 28.09.2023
(51) Int. Cl.: B60R 16/02, B60R 16/023, B60K 1/00

(54) **SCHUTZVORRICHTUNG UND ARBEITSMASCHINE**

(30) Priorität: 04.10.2022 DE 102022125494
(71) Anmelder: Liebherr-Werk Nenzing GmbH, 6710 Nenzing (AT)
(72) Erfinder: SCHALL, Paul, 6800 Feldkirch (AT); WACHTER, Dominik, 6751 Innerbraz (AT); JUEN, Peter, 6771 St. Anton (AT)
(74) Vertreter: Laufhütte, Dieter

(57) **Zusammenfassung**

Die vorliegende Erfindung betrifft eine Schutzvorrichtung für eine Komponente eines elektrischen Antriebs eines Antriebsrads einer Arbeitsmaschine, wobei die Komponente auf der Höhe der Achse des Antriebsrads angeordnet ist, wobei die Schutzvorrichtung dazu ausgebildet ist, die Komponente zumindest teilweise vor Feuchtigkeit und/oder mechanischer Einwirkung zu schützen, wobei die Schutzvorrichtung eine Schnittstelle umfasst, wobei die Schnittstelle derart ausgebildet ist, dass durch die Schnittstelle, der Komponente zuzuführende Energie und/oder Betriebsmittel geleitet werden können.

## Beschreibung

Die vorliegende Erfindung betrifft eine Schutzvorrichtung für eine Komponente eines elektrischen Antriebs eines Antriebsrads einer Arbeitsmaschine, wobei die Komponente auf der Höhe der Achse des Antriebsrads angeordnet ist, wobei die Schutzvorrichtung dazu ausgebildet ist, die Komponente zumindest teilweise vor Feuchtigkeit und/oder mechanischer Einwirkung zu schützen.

Nach dem Stand der Technik sitzen die elektrischen Fahrantriebe einer Arbeitsmaschine an einem Antriebsrad. Vergleichbar mit einem konventionellen Seilbagger sitzen beispielsweise an einem Raupenträger des Seilbaggers die elektrischen Fahrantriebe am Antriebsrad des Raupenantriebs und treiben von dort aus über die Raupenketten den Seilbagger an.

Aufgrund der zulässigen Wattiefe eines Seilbaggers, kann sich beim Durchfahren von Wasser oder beim Stehen in Wasser, der elektrische Fahrantrieb am Raupenträger unterhalb der Wasseroberfläche befinden. Ebenso sind die elektrischen Fahrantriebe vor mechanischen Einwirkungen, beispielsweise durch Steinschlag beim Fahren, zu schützen.

Ebenso ist der elektrische Fahrantrieb mit Energie und/oder Betriebsmitteln zu versorgen.

Vor diesem Hintergrund liegt der vorliegenden Erfindung die Aufgabe zugrunde, eine oben genannte Schutzvorrichtung derart weiterzubilden, dass eine einfache Versorgung des Fahrantriebs mit Energie und/oder Betriebsmitteln erfolgt.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Schutzvorrichtung eine Schnittstelle umfasst, wobei die Schnittstelle derart ausgebildet ist, dass durch die Schnittstelle, der Komponente zuzuführende Energie und/oder Betriebsmittel geleitet werden können.

Unter einer Anordnung der Komponente auf der Höhe der Achse des Antriebsrads ist vorzugsweise zu verstehen, dass die Komponente eine Achse aufweist, die mit der Achse des Antriebsrades fluchtet oder, dass die Komponente die Achse des Antriebsrades antreibt und/oder, dass die Komponente weniger als einen Meter, vorzugsweise weniger als 80 oder 50 cm vom Boden der Arbeitsmaschine oder vom Boden, auf dem die Arbeitsmaschine steht, entfernt, angeordnet ist.

Vorzugsweise ist vorgesehen, dass die Komponente ein Elektromotor ist oder einen solchen umfasst.

Denkbar ist, dass die Schutzvorrichtung eine Haube oder eine Kapsel umfasst und/oder demontierbar ist.

Vorzugsweise ist vorgesehen, dass die Schnittstelle an der Haube und/oder Kapsel angeordnet ist. Denkbar ist, dass die Schnittstelle im montierten Zustand der Schutzvorrichtung an einem Bereich, der von der Arbeitsmaschine absteht, angeordnet ist. Vorzugsweise ist vorgesehen, dass die Schnittstelle derart ausgebildet ist, dass die Schutzvorrichtung gegen den Eintritt von Feuchtigkeit abgedichtet ist.

Denkbar ist, dass die Schutzvorrichtung als Schweißkonstruktion ausgeführt ist.

Vorzugsweise ist vorgesehen, dass die Energie in Form von Hochvoltwechselstrom und/oder in Form von elektrischen Signalen und die Betriebsmittel in Form von Kühlflüssigkeit vorliegen.

Denkbar ist, dass die Schutzvorrichtung einen Wasserstands- und/oder Feuchtigkeitssensor aufweist.

Es kann vorgesehen sein, dass die Schutzvorrichtung dazu ausgebildet ist, um an einem Raupenträger angeordnet zu werden.

Die Erfindung betrifft auch eine Arbeitsmaschine mit einer Komponente eines elektrischen Antriebs eines Antriebsrads, wobei die Komponente auf der Höhe der Achse des Antriebsrads angeordnet ist und mit einer erfindungsgemäßen Schutzvorrichtung wobei die Schutzvorrichtung derart angeordnet ist, dass die Komponente zumindest teilweise vor Feuchtigkeit und/oder mechanischer Einwirkung geschützt ist.

Denkbar ist, dass Arbeitsmaschine eine mobile Arbeitsmaschine, ein Raupenkran oder ein Seilbagger ist und/oder ein Ramm- und/oder Bohrgerät ist oder umfasst.

Um sowohl die elektrischen Schnittstellen des Antriebs bzw. des Motors als auch den Antrieb selbst vor Wasser und Feuchtigkeit zu schützen, kann dieser mit einer Schutzvorrichtung in Form einer abdichtenden Kapsel mindestens teilweise umschlossen werden. Dadurch kann die Gefahr von Kurzschlüssen und anderen Defekten am elektrischen Fahrantrieb vermieden werden. Der elektrische Fahrantrieb kann aus dem Hochvolt-Bordnetz versorgt werden, wobei ein Inverter sowohl die Kommunikation mit dem Motor als auch die Modulation von Strom und Spannung zur Versorgung des Fahrantriebs übernehmen kann. Die Kapselung des Fahrantriebs kann Schnittstellen für die Versorgungsleitungen des elektrischen Fahrantriebs vorsehen, die ebenfalls abgedichtet sind.

Es erfolgt vorzugsweise eine Kapselung der Fahrwerksmotoren zum mechanischen Schutz sowie dem Schutz vor Feuchtigkeit und Wasser.

Vorzugsweise können elektrische Schnittstellen am Raupenträger gegen Wasser-/Feuchtigkeitseintritt abgedichtet werden.

Die Schutzvorrichtung dient vorzugsweise dem Schutz eines Teils des elektrischen Fahrantriebs, sowie allen damit verbundenen Schnittstellen, vor Feuchtigkeit und Wasser sowie mechanischer Beschädigung.

Die Kapselung der elektrischen Fahrantriebe kann über ebenfalls wasserdichte Schnittstellen für die Versorgungsleitungen des elektrischen Antriebs verfügen.

Die Kapselung kann als Schweißkonstruktion ausgeführt sein, wobei die Kapsel oder Schutzvorrichtung Schnittstellen für die Versorgungsleitungen eines elektrischen Fahrantriebs vorsehen kann. Die Versorgungsleitungen umfassen vorzugsweise drei Phasen Hochvoltwechselstrom, mindestens eine Steuer- und/oder Signalleitung und Kühlmittelleitungen. Die Versorgungsleitungen können ebenfalls vor Wassereintritt geschützt werden. Die Schutzeinrichtung kann eine Feuchtigkeits- oder Füllstandüberwachung aufweisen, mit der die Dichtheit der Kapselung vor Wassereintritt geprüft wird und ein ggf. automatisches Spannungsfreischaltung der Maschine umgesetzt werden kann. Die Kapselung oder Schutzvorrichtung ist für Wartungsarbeiten vorzugsweise am elektrischen Fahrantrieb montierbar und demontierbar.

Es können sowohl die elektrischen Schnittstellen wie Steckverbinder als auch der Motor selbst vor in Bezug auf elektrische und/oder mechanische Funktionalität des Antriebs negativen Umwelteinflüssen geschützt werden.

Durch die Schutzvorrichtung ist es möglich, elektrische Fahrantriebe an einem Raupenträger zu betreiben, wobei sich aufgrund der zulässigen Wattiefe der Maschine, der Fahrantrieb unterhalb der Wasseroberfläche befindet.

Die Kapsel verfügt vorzugsweise über eine Feuchtigkeits- und/oder Füllstandüberwachung zur Prüfung der Dichtheit der Kapselung vor Wassereintritt.

Die Kapselung des elektrischen Fahrantriebs weist vorzugsweise folgende Eigenschaften auf: Die Kapsel dichtet ihren Innenraum vor Wasser und/oder Feuchtigkeit ab. Die Kapsel verfügt über Schnittstellen, sodass die Versorgungsleitungen des elektrischen Antriebs in die Kapsel geführt werden können. Die Kapsel ist montierbar und demontierbar.

Durch die Montier- und Demontierbarkeit der Kapselung ist vorzugsweise eine einfache Zugänglichkeit zum Fahrantrieb gegeben.

Der elektrische Fahrantriebe kann vorzugsweise mit einer montier- und demontierbaren Schutzvorrichtung vor Umwelteinflüssen, wie Wasser, mechanischen Belastungen etc. geschützt werden.

Ohne eine Schutzvorrichtung ist es erheblich schwieriger, elektrische Fahrantriebe an Raupenträgern zu betrieben, da kein Schutz vor Wasser und mechanischer Beschädigung vorhanden ist. Insbesondere bei einem Seilbagger mit zulässiger Wattiefe ergeben sich Nachteile. Wenn die Schutzeinrichtung keine Schnittstelle für die Versorgungsleitungen des elektrischen Fahrantriebs aufweist, wird eine grundsätzlich andere Verlegeart der Versorgungsleitungen notwendig. Die Fahrantriebe können dann nicht direkt vom Unterwagen bzw. vom Mittelteil aus versorgt werden, sondern die Versorgungsleitungen sind dann durch den Stahlbau des Raupenträgers zu führen. Die Zugänglichkeit für die Montage sowie das Abdichten aller relevanten Öffnungen stellt ohne eine Schutzvorrichtung mit Schnittstellen einen erheblichen Mehraufwand dar.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Skizze einer Ausführungsform einer erfindungsgemäßen Schutzvorrichtung.
- Fig. 2:: eine Ansicht einer Ausführungsform einer erfindungsgemäßen Schutzvorrichtung an einer Arbeitsmaschine.

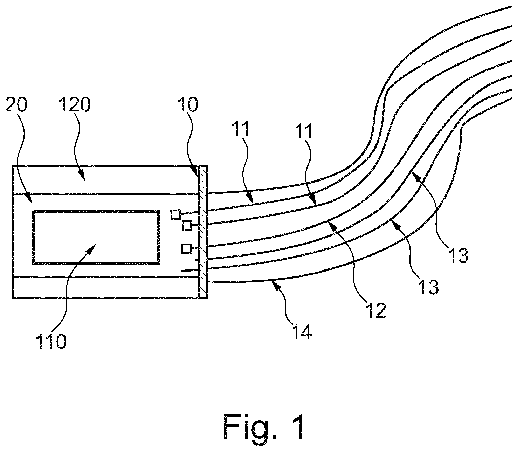

In Fig. 1 ist eine Schutzvorrichtung 20 für einen elektrischen Fahrantrieb mit einem Elektromotor 110 mit einer Schnittstelle 10 für die Versorgungsleitungen 11, 12 und 13 des elektrischen Fahrantriebs skizziert dargestellt. Die Schutzeinrichtung 20 ist an unterschiedlichen Stellen mit Dichtungen versehen, sodass der Innenraum der Schutzvorrichtung vor Wasser geschützt ist. Die Schutzeinrichtung 20 schützt den Elektromotor 110 und ist an einem Raupenträger 120 angebracht. An die Schnittstelle sind Hochvoltleitungen 11, Steuer- und/oder Signalleitungen 12 und Kühlmittelleitungen 13 angeschlossen. Die an die Schnittstelle angeschlossenen Leitungen, insbesondere 11, 12 und 13, können bis zur Schnittstelle in einer flexiblen Schutzeinrichtung verlaufen.

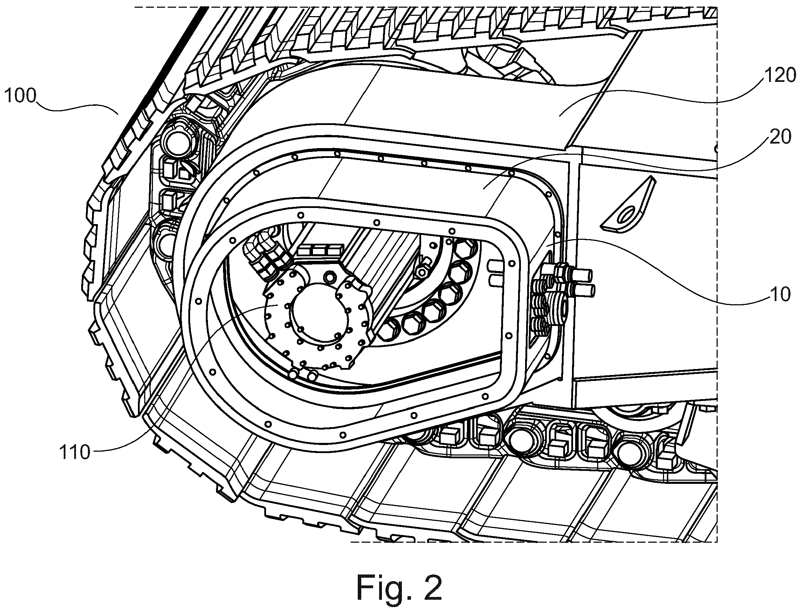

In Fig. 2 ist ein Ausschnitt eines CAD-Modells eines Seilbaggers 100 mit einem Raupenträger 120 dargestellt. Gezeigt wird eine mögliche Umsetzung einer Schutzvorrichtung 20 für den elektrischen Fahrantrieb als Schweißkonstruktion. Insbesondere wird der Motor 110 des elektrischen Fahrantriebs durch die Schutzvorrichtung geschützt 20. Auf der rechten Seite der Schutzvorrichtung 20 sind die Schnittstellen 10 für die Versorgungsleitungen des elektrischen Fahrantriebs dargestellt. Alle Schnittstellen/Öffnungen der Schutzvorrichtung sind abgedichtet, sodass der Innenraum der Schutzeinrichtung 20 vor Wasser und/oder Feuchtigkeit geschützt ist.

## Patentansprüche

1. Schutzvorrichtung für eine Komponente eines elektrischen Antriebs eines Antriebsrads einer Arbeitsmaschine, wobei die Komponente auf der Höhe der Achse des Antriebsrads angeordnet ist, wobei die Schutzvorrichtung dazu ausgebildet ist, die Komponente zumindest teilweise vor Feuchtigkeit und/oder mechanischer Einwirkung zu schützen, **dadurch gekennzeichnet, dass** die Schutzvorrichtung eine Schnittstelle umfasst, wobei die Schnittstelle derart ausgebildet ist, dass durch die Schnittstelle, der Komponente zuzuführende Energie und/oder Betriebsmittel geleitet werden können.

2. Schutzvorrichtung nach Anspruch 1, **dadurch gekennzeichnet, dass** die Komponente ein Elektromotor ist oder einen solchen umfasst.

3. Schutzvorrichtung nach Anspruch 1 oder 2, **dadurch gekennzeichnet, dass** die Schutzvorrichtung eine Haube oder eine Kapsel umfasst und/oder demontierbar ist.

4. Schutzvorrichtung nach einem der vorhergehenden Ansprüche, **dadurch gekennzeichnet, dass** die Schnittstelle derart ausgebildet ist, dass die Schutzvorrichtung gegen den Eintritt von Feuchtigkeit abgedichtet ist.

5. Schutzvorrichtung nach einem der vorhergehenden Ansprüche, **dadurch gekennzeichnet, dass** die Schutzvorrichtung als Schweißkonstruktion ausgeführt ist.

6. Schutzvorrichtung nach einem der vorhergehenden Ansprüche, **dadurch gekennzeichnet, dass** die Energie in Form von Hochvoltwechselstrom und/oder in Form von elektrischen Signalen und die Betriebsmittel in Form von Kühlflüssigkeit vorliegen.

7. Schutzvorrichtung nach einem der vorhergehenden Ansprüche, **dadurch gekennzeichnet, dass** die Schutzvorrichtung einen Wasserstands- und/oder Feuchtigkeitssensor aufweist.

8. Schutzvorrichtung nach einem der vorhergehenden Ansprüche, **dadurch gekennzeichnet, dass** die Schutzvorrichtung dazu ausgebildet ist, um an einem Raupenträger angeordnet zu werden.

9. Arbeitsmaschine mit einer Komponente eines elektrischen Antriebs eines Antriebsrads, wobei die Komponente auf der Höhe der Achse des Antriebsrads angeordnet ist und mit einer Schutzvorrichtung nach einem der vorhergehenden Ansprüche, **dadurch gekennzeichnet, dass** die Schutzvorrichtung derart angeordnet ist, dass die Komponente zumindest teilweise vor Feuchtigkeit und/oder mechanischer Einwirkung geschützt ist.

10. Arbeitsmaschine nach Anspruch 9, **dadurch gekennzeichnet, dass** Arbeitsmaschine eine mobile Arbeitsmaschine, ein Raupenkran oder ein Seilbagger ist und/oder ein Ramm- und/oder Bohrgerät ist oder umfasst.
